# EUROPÄISCHE PATENTSCHRIFT

(11) **EP 0 403 818 B1**
(45) Veröffentlichungstag und Bekanntmachung des Hinweises auf die Patenterteilung: **27.07.1994**
(21) Anmeldenummer: 90109866.5
(22) Anmeldetag: 23.05.1990
(51) Int. Cl.: F16H 7/02, G03B 9/34

(54) **Riemenantrieb**
Belt drive
Entraînement à courroies

(30) Priorität: 21.06.1989 DE 3920182
(43) Veröffentlichungstag der Anmeldung: 27.12.1990
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Tull, Bernward, D-7080 Aalen (DE); Pusch, Hans-Dieter, D-7082 Oberkochen (DE)

(56) Entgegenhaltungen:
- AT-B- 240 063
- DE-C- 818 154
- US-A- 3 577 794
- PATENT ABSTRACTS OF JAPAN vol. 4, no. 37 (M-4)(519) 27 März 1980,& JP-A-55 010145 (SABUROU HANDA) 24 Januar 1980,
- DE-A 34 18 383

## Beschreibung

Die Erfindung betrifft einen Riemenantrieb mit einer Riemenscheibe, die eine Auflagefläche für den Riemen und in radialer Richtung Vorsprünge aufweist, die in entsprechende Aussparungen des Antriebsriemens eingreifen entsprechend den im Obergriff von Anspruch 1 augführten Merkmalen.

Derartige Riemenantriebe sind in der Technik gut bekannt. Sie ermöglichen einen Antrieb über größere räumliche Distanzen mit einfachen technischen Mitteln. Sie können auch als steuernde Antriebe verwendet werden, denn der Riemen sorgt für eine eindeutige Zuordnung der Position der angetriebenen Teile zu der der Antriebswelle.

Insbesondere bei dünnen, gelochten Antriebsriemen weist die Riemenscheibe seitlich von den Vorsprüngen (Stacheln) noch eine Auflagefläche für den Riemen auf. Diese Auflagefläche ist Teil des antreibenden bzw. des abgetriebenen Stachelrades.

In der gattungsgemäßen DE-A-3 418 383 wird eine Riemenscheibe für einen derartigen Riemenantrieb beschrieben. Es werden Formen und Abmessungen der Vorsprünge und der Auflagefläche genannt, die sich vorteilhaft auf die Laufeigenschaften des Antriebs auswirken sollen. Insbesondere werden Vorsprünge mit runden, seitlichen Begrenzungsflächen bevorzugt.

In der WO-A-85/00439 werden Möglichkeiten beschrieben, wie eine zweite Riemenscheibe, die über einen solchen Riemenantrieb angetrieben wird und einen größeren Durchmesser als die antreibende Riemenscheibe besitzt, zweckmäßig gestaltet ist.

Bei den bekannten Riemenantrieben dieser Art wird der Riemen gleichzeitig durch zwei Mechanismen angetrieben. Der erste Antriebsmechanismus erfolgt durch den Eingriff der Vorsprünge bzw. Stacheln der Riemenschiebe in die Aussparungen des Riemens. Dieser Antriebsmechanismus stellt einen zwangsgeführten Riemenantrieb bzw. eine erste Triebverbindung dar. Ferner stellt die Reibung zwischen der Auflagefläche und dem Riemen einen zweiten, konkurrierenden Antriebsmechanismus dh. eine zweite Triebverbindung dar. Aufgrund des Dehnungsschlupfes treibt der zweite Antriebsmechanismus über die Auflagefläche den Riemen schneller an als der zwangsgeführte, erste Antriebsmechanismus.

Als Folge dieser zwei konkurrierenden Antriebsmechanismen mit unterschiedlichen Transportgeschwindigkeiten tritt eine starke Belastung der Aussparungen im Riemen auf. Diese Belastung beschädigt die Aussparungen auf der zur Bewegungsrichtung des Riemens entgegengesetzten Seite und kann sogar zur Zerstörung des Riemens führen. Dieses Problem tritt beispielsweise in photogrammetrischen Geräten auf. Dort können Beschädigungen der dünnen, gelochten Stahlbänder, die den Schlitzverschluß vom Bildmeßkammern antrieben, zu einem vorzeitigen Ausfall des Gerätes führen.

Es ist daher die Aufgabe dieser Erfindung, einen Riemenantrieb der eingangs genannten Art zu schaffen, bei dem die Belastung des Riemens deutlich herabgesetzt ist, und die Standzeit des Riemens entsprechend länger ist.

Diese Aufgabe wird dadurch gelöst, daß die beidem Triebverbindungen entkoppelt vomeimander angeordnet sind.

Die Entkopplung der beiden Triebverbindungen bewirkt, daß der Antrieb des Riemens nur durch einen einzigen Antriebsmechanismus erfolgt. Dadurch werden die im Inneren des Riemens auftretenden Kräfte und damit der Verschleiß deutlich reduziert. Welcher Antriebsmechanismus durch die Entkopplung ausgeschaltet wird ist für die Reduzierung dieser Kräfte unwesentlich.

Die Entkopplung der beiden Triebverbindungen kann z.B. dadurch erfolgen, daß die Auflagefläche um die Drehachse der Riemenscheibe drehbar an dem Teil der Riemenscheibe gelagert ist, der die Vorsprünge aufweist.

Um jegliche Haftreibung zwischen dem Riemen und dem die Vorsprünge aufweisenden Riemenscheibenteil zu unterbinden, darf der Riemen nirgendwo auf diesem Teil auf liegen. Deshalb sollte der Durchmesser der die Auflagefläche tragenden Riemenscheibenteile größer sein als der zwischen den Vorsprüngen gemessene Durchmesser des die Vorsprünge tragenden Riemenscheibenteiles.

Für eine einfache und effektive Entkopplung ist dabei ein Kugellager als Drehlager vorgesehen.

Wenn die momentane Position der angetriebenen Teile des Riemenantriebes jederzeit bekannt sein soll, ist es zweckmäßig, daß der Riemen durch die Vorsprünge der Riemenscheibe angetrieben wird. Die Position der angetriebenen Teile läßt sich dann über einen mit der Riemenscheibe gekoppelten Stellungsgeber ermitteln. In dieser Ausführungsform dient eine Welle sowohl zum Antrieb der Riemenscheibe als auch zur Positionsbestimmung der angetriebenen Teile. Insbesondere kann dann der Antrieb der Riemenscheibe durch einen Motor mit integriertem Stellungsgeber erfolgen.

Bei diesem Ausführungsbeispiel treibt der Riemen die Auflagefläche an, über die er gelegt ist. Zur Reduzierung der während der Beschleunigungsphasen des Antriebs auf den Riemen wirkenden Kräfte sollte deshalb das Trägheitsmoment der Teile, die vom Riemen angetrieben werden, so gering wie möglich sein. Daher dient bei einer vorteilhaften Ausführungsform der Außenring des Kugellagers selbst als Auflagefläche.

Zur Vermeidung großer lokaler Spannungen in Antriebsriemen haben die Vorsprünge der Antriebsscheibe einem rechteckigen Grundriß. Die Kontaktfläche zwischen den Vorsprüngen und dem Antriebsriemen wird dadurch vergrößert.

Das Eingreifen der Vorsprünge der Antriebsscheibe in die Aussparungen des Riemens sollte reibungsarm und leichtgängig erfolgen. Das gleiche sollte auch für das Ausgreifen gelten. Dies läßt sich dadurch erreichen, daß die Vorsprünge die Form von kreisbogenförmigen zähnen besitzen.

Der erfindungsgemäße Riemenantrieb kann genutzt werden, um den Schlitzverschluß einer photogrammetrischen Meßkammer anzutreiben. Dieser Anwendungsfall fordert von dem Antrieb eine hohe Geschwindigkeit, um kurze Belichtungszeiten zu ermöglichen. Soll die Bildfolgefrequenz frei wählbar sein, so muß der Schlitzverschluß außerdem im Start/Stopbetrieb arbeiten. Der Antrieb muß dann stark beschleunigt werden. Weiterhin wird bei diesen Geräten zum Ausgleich der bei einer Bewegung der Meßkammer auftretenden Bildwanderung die Position des Schlitzes während der Belichtung gemessen und der Film entsprechend nachgeführt. Alle diese an den Riemen eines solchen Schlitzverschlusses gestellten Anforderungen werden von dem erfindungsgemäßen Riemenantrieb gut erfüllt.

Im folgenden werden Ausführungsformen des erfindungsgemäßen Riemenantriebes anhand der Zeichnungen näher erläutert.

Im einzelnen zeigen:
- Figur 1: einen Schnitt durch die Antriebsscheibe und den Antriebsriemen eines ersten Ausführungsbeispiels für den Riemenantrieb in einer zur Drehachse der Antriebsscheibe senkrechten Ebene entlang der Linie I-I in Figur 2;
- Figur 2: einen Schnitt durch die Antriebsscheibe und den Antriebsriemen aus Figur 1 in einer die Drehachse der Antriebsscheibe enthaltenden Ebene;
- Figur 3: eine Aufsicht auf ein Stück des Antriebsriemens aus Figur 1;
- Figur 4: eine perspektivische Darstellung der Antriebsscheibe und des Antriebsriemens in einem zweiten Ausführungsbeispiel, bei dem die Vorsprünge der Antriebsscheibe einen rechteckigen Grundriß aufweisen;
- Figur 5: einen Schnitt durch die Antriebsscheibe und den Antriebsriemen eines weiteren Ausführungsbeispieles in einer zur Drehachse senkrechten Ebene entlang der Linie V-V in Figur 6;
- Figur 5a: einen vergrößert dargestellten, kreisbogenförmigen Zahn des Ausführungsbeispieles aus Figur 5;
- Figur 6: einen Schnitt durch die Antriebsscheibe und den Antriebsriemen aus Figur 5 in einer die Drehachse der Antriebsscheibe enthaltenden Ebene;
- Figur 7: eine perspektivische Darstellung eines Schlitzverschlusses einer photogrammetrischen Meßkammer, der mit einem Riemenantrieb des Ausführungsbeispiels nach Figur 5 und 6 versehen ist.

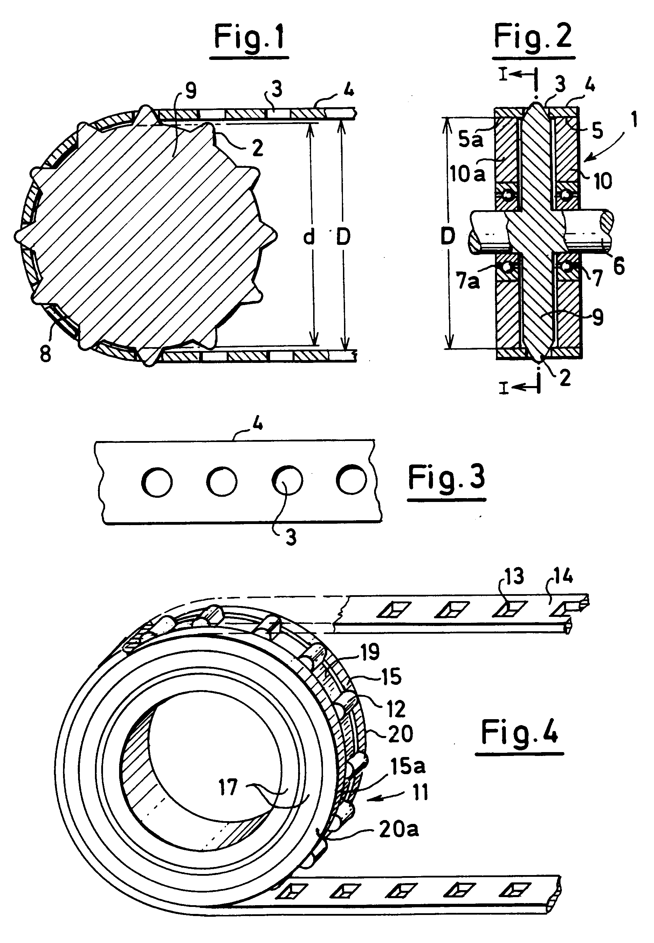

Wie in Figur 1 und 2 dargestellt besteht die Antriebsscheibe (1) aus einer Zahnscheibe (weiterer Riemenscheibenteil) (9), die mit Vorsprüngen (2) versehen ist. Die Vorsprünge (2) haben einen runden Grundriß. Die Zahnscheibe (9) wird über die Welle (6) angetrieben. Der Antriebsriemen (4) liegt seitlich der Löcher (Aussparungen) (3) auf einer Auflagefläche (5) auf. In diesem Ausführungsbeispiel weist die Antriebsscheibe (1) noch eine zweite Auflagefläche (5a) auf, die sich auf der anderen Seite der Vorsprünge (2) befindet. Dem Grundriß der Vorsprünge (2) der Zahnscheibe (9) entsprechend hat der Antriebsriemen (4) gemäß Figur 3 kreisrunde Löcher (3). Das Eingreifen der Vorsprünge (2) in die Löcher (3) bewirkt eine Zwangsführung des Antriebriemens (4).

Im Gegensatz zu den bekannten Antriebsscheiben, bei denen der Antrieb des Riemens durch zwei konkurrierende Antriebsmechanismen erfolgt, ist in dem Ausführungsbeispiel nach Figur 1 - 3 der Erfindung einer der beiden Antriebsmechanismen ausgeschaltet. Denn die ringförmigen Teile (Riemenscheibenteil) (10,10a), die die Auflagefläche (5,5a) für den Riemen (4) tragen, sind mit Hilfe zweier Kugellager (7,7a) um die Welle (6) frei drehbargelagert und daher von der Drehbewegung der Welle (6) und der Zahnscheibe (9) entkoppelt.

Wenn die Welle (6) als Antriebswelle dient, so erfolgt der Antrieb des Riemens (4) alleine durch das Eingreifen der Vorsprünge (2) in die Löcher (3). Ein Stellungsgeber, der die Position der angetriebenen Teile mißt, kann deshalb direkt an der Antriebswelle (6) angebracht oder mit dem Motor, der den Riemenantrieb antreibt, integriert sein.

Dadurch, daß bei diesem erfindungsgemäßen Riemenantrieb der Antrieb des Riemens nur durch einen einzigen Antriebsmechanismus erfolgt, werden die im Inneren des Riemens wirkenden Kräfte,verglichen mit bekannten Riemenantrieben, deutlich reduziert und die Standzeit des Riemens entsprechend verlängert.

Es ist außerdem darauf zu achten, daß der Antriebsriemen (4) nirgendwo auf einer Fläche aufliegt, die mit der Welle (6) oder den Vorsprüngen (2) starr verbunden ist. Deshalb ist der Durchmesser d der Zahnscheibe (9), zwischen den Vorsprüngen (2) gemessen, kleiner als der Außendurchmesser D der die Auflageflächen (5,5a) tragenden Teile (10,10a). Es werden dann zwischen den Antriebsriemen (4) und der Antriebsscheibe (1) gemäß Figur 1 kleine Hohlräume (8) eingeschlossen.

Um die lokalen Spannungen im Antriebsriemen (4) unter vorgegebenen Betriebsbedingungen so gering wie möglich zu halten, sollte die Antriebskraft auf einer möglichst großen Fläche von den Vorsprüngen (2) der Zahnscheibe (9) auf den Antriebsriemen (4) übertragen werden. Deshalb verfügen die Vorsprünge (12) im Ausführungsbeispiel nach Figur 4 über einen rechteckigen Grundriß. Dementsprechend besitzt der Antriebsriemen (14) rechteckige Löcher (13).

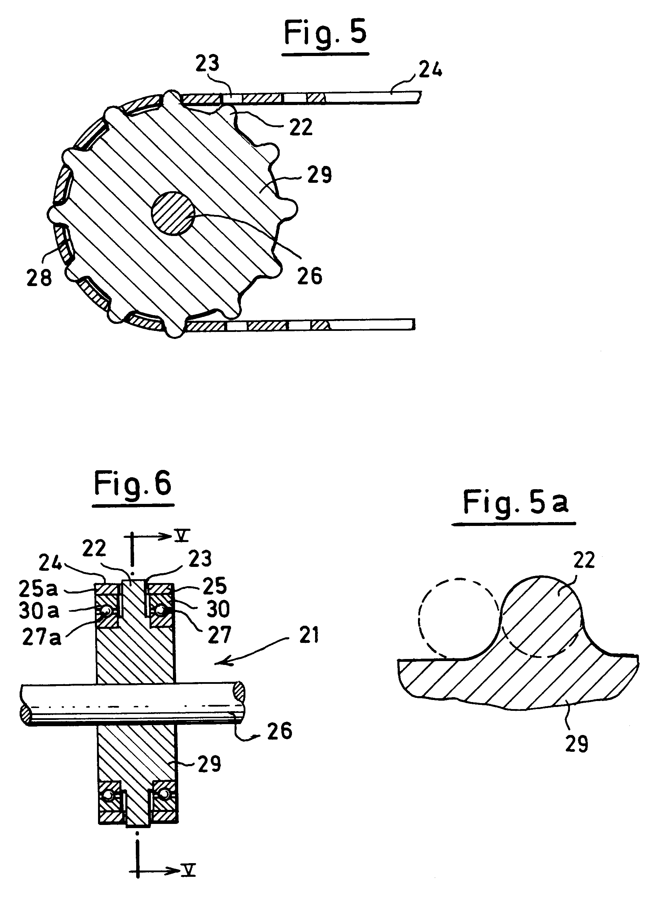

Im Ausführungsbeispiel nach Figur 5 und 6 sind die Vorsprünge (22) der Antriebsscheibe (21) als kreisbogenförmige Zähne gestaltet. Diese, in Figur 5a vergrößert dargestellte Zahnform gewährleistet, daß die Vorsprünge (22) reibungsarm und leichtgängig in die Löcher (23) eingreifen bzw. aus ihnen ausgreifen können.

Da der Antriebsriemen (24), der selbst von der Zahnscheibe (29) angetrieben wird, seinerseits durch Reibung die eigenen Auflageflächen (25,25a) auf dem Antriebsrad (21) antreibt, sind in der Beschleunigungsphase des Antriebs die vom Antriebsriemen übertragenen Kräfte um so größer, je größer das mit den Auflageflächen (25,25a) verbundene Trägheitsmoment ist. Dieses Trägheitsmoment kann dadurch klein gehalten werden, daß wie in Figur 6 dargestellt die äußeren Ringe (30,30a) der Kugellager (27,27a) selbst die Auflagefläche (25,25a) für den Antriebsriemen (24) bilden.

Ein möglicher Anwendungsfall für den erfindungsgemäßen Riemenantrieb ist der Schlitzverschluß einer photogrammetrischen Meßkammer.

Ein solcher Schlitzverschluß besteht aus insgesamt vier parallel zueinander angeordneten Riemen, die entsprechend dem Ausführungsbeispiel nach Figur 5 und Figur 6 ausgebildet sind und einen gemeinsamen Antrieb besitzen.

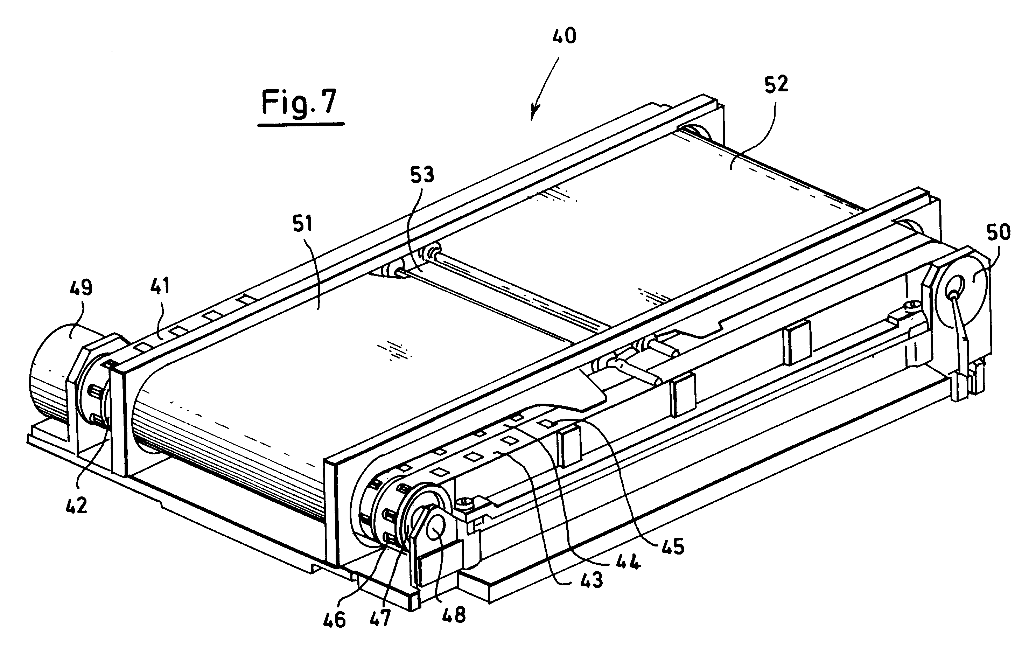

Die Figur 7 zeigt einen solchen Schlitzverschluß (40). Die vier Antriebsriemen (41,42,43,44) besitzen rechteckige Löcher (45), in die die Kreisbogenförmigen Zähne (46) der Antriebsscheiben (47) eingreifen. Die vier Antriebsscheiben werden paarweise über zwei koaxiale Antriebswellen von einem Motor (49) angetrieben. Die innere der beiden Antriebswellen ist mit (48) bezeichnet. Seitlich der Zähne (46) liegen die Riemen (41,42,43,44) auf Kugellagern auf. Die Riemen bestehen aus Edelstahl und haben eine Dicke von 0,06 mm. Eine zylindrische Welle (50), über die die Riemen (41,42,43,44) gelegt sind, dient als getriebene Riemenscheibe.

An den Antriebsriemen sind zwei Tücher (51,52) befestigt. Das Tuch (51) ist an den beiden äußeren Antriebsriemen (41,43) und das Tuch (52) an den beiden inneren Antriebsriemen (42,44) befestigt. Der Zwischenraum zwischen den Tüchern (51,52) bildet den Schlitz (53) des Verschlusses.

Die beiden koaxialen Antriebswellen sind durch ein nicht näher dargestelltes Getriebe gekoppelt, das es erlaubt, die äußeren Riemen (41,43) relativ zu den inneren Riemen (42,44) zu bewegen. Dadurch läßt sich die Breite des Schlitzes (53) variieren.

Zur Belichtung wird der Schlitz (53) über den photographischen Film hinweg transportiert. Dazu werden die vier Antriebsriemen (41,42,43,44) mit der gleichen konstanten Geschwindigkeit angetrieben.

Gleichzeitig wird mit Hilfe eines mit der Antriebswelle (48) gekoppelten Stellungsgebers die momentane Schlitzposition ermittelt und der photographische Film derart nachgeführt, daß die bei einer Bewegung der Meßkammer auftretende Bildwanderung ausgeglichen wird. Damit aus der Stellung der Antriebswelle (48) die Schlitzposition ermittelt werden kann, müssen die Antriebsriemen (41,42,43,44) zwangsgeführt sein. Dazu dienen die kreisbogenförmigen Zähne (46) der Antriebsscheiben (47) und die Löcher (45) der Antriebsriemen (41,42,43,44).

Während der Belichtung hat der Schlitz (53) eine typische Geschwindigkeit von 5 m pro Sekunde.

Der Schlitzverschluß arbeitet im Start/Stopbetrieb, damit die Bildfolgefrequenz frei wählbar ist. Deshalb muß der Schlitz (53) auf einer Strecke, die etwa ein Viertel so groß wie seine Zyklusbahn ist, bis zur Endgeschwindigkeit beschleunigt werden.

Bei einem entsprechend dem Ausführungsbeispiel nach Figur 7 konstruierten Schlitzverschluß sind die Spannungen innerhalb der Antriebsriemen (41,42,43,44) gegenüber dem Stand der Technik deutlich reduziert. Dementsprechend geringer ist auch der Verschleiß. Insbesondere ist das Reißen der Antriebsriemen (41,42,43,44) weitgehend ausgeschaltet.

Da die Betriebsstörungen in Bildmeßkammern bisher häufig durch verschlissene oder gerissene Antriebsriemen des Schlitzverschlusses verursacht werden, ermöglicht der neue Schlitzverschluß erheblich längere Standzeiten solcher photogrammetrischer Meßkammern.

In den vorstehend beschriebenen Ausführungsbeispielen besteht die Antriebsscheibe immer aus zwei unabhängig voneinander drehbaren Teilen. Dies ist für eine wirksame Entkopplung der beiden konkurrierenden Antriebsmechanismen jedoch nicht unbedingt erforderlich. Es ist beispielsweise auch möglich, die Antriebsscheibe einteilig zu belassen und ein Gleitmittel zwischen die Auflagefläche und den Antriebsriemen zu bringen. Da ein solches Gleitmittel die Reibung reduziert, wird der Riemen dann ebenfalls nur durch einen einzigen Antriebsmechanismus angetrieben.

## Patentansprüche

1. Riemenantrieb mit einer Riemenscheibe,
- die einen Riemenscheibenteil mit einer Auflagefläche (5,5a;15,15a;25,25a) für einen Riemen (4;14;24) aufweist, wobei die Auflagefläche des Riemenscheibenteiles mit dem Riemen eine Triebverbindung bildet, und
- die einen weiteren Riemenscheibenteil (9;19;29) mit in radialer Richtung angeordneten Vorsprüngen (2;12;22) aufweist, die in entsprechende Aussparungen (3;13;23) des Riemens eingreifen und ebenfalls eine Triebverbindung bilden,
**dadurch gekennzeichnet**, daß die beiden Triebverbindungen entkoppelt voneinander angeordnet sind.

2. Riemenantrieb nach Anspruch 1, dadurch gekennzeichnet, daß die Riemenscheibe aus mindestens zwei unabhängig drehbaren Riemenscheibenteilen (9, 10, 10a) besteht.

3. Riemenantrieb nach Anspruch 2, dadurch gekennzeichnet, daß der Durchmesser (D) des die Auflagefläche (5, 5a) tragenden Riemenscheibenteiles (10, 10a) größer ist als der zwischen den Vorsprüngen (2) gemessene Durchmesser (d) des die Vorsprünge (2) tragenden Riemenscheibenteiles (9).

4. Riemenantrieb nach Anspruch 2 oder 3, dadurch gekennzeichnet, daß der die Auflagefläche (5, 5a;25, 25a) tragende Riemenscheibenteil über Kugellager (7, 7a;27, 27a) gelagert ist.

5. Riemenantrieb nach Anspruch 4, dadurch gekennzeichnet, daß der Außenring (30, 30a) der Kugellager (27, 27a) jeweils den Riemenscheibenteil mit der Auflagefläche (25, 25a) für den Riemen (24) bildet und der die Vorsprünge (22) tragende Riemenscheibenteil (29) den Riemen (24) antreibt.

6. Riemenantrieb nach einem der Ansprüche 1-5, dadurch gekennzeichnet, daß die Vorsprünge (12, 22) der Riemenscheibe einen rechteckigen Grundriß besitzen.

7. Riemenantrieb nach Anspruch 6, dadurch gekennzeichnet, daß die Vorsprünge (22) in Radialrichtung kreisbogenförmig ausgebildet sind.

8. Riemenantrieb nach einem der Ansprüche 1-7, gekennzeichnet durch seine Verwendung als Antrieb eines Schlitzverschlusses (40) einer photogrammetrischen Meßkammer.

9. Photogrammetrische Meßkammer mit einem Schlitzverschluß, dadurch gekennzeichnet, daß der Schlitz (53) von mindestens einem Riemenantrieb angetrieben wird, dessen Antriebsscheibe (47) aus mindestens zwei unabhängig drehbaren Riemenscheibenteilen besteht, von denen eines in radialer Richtung Vorsprünge (46) aufweist, die in entsprechende Aussparungen (45) des Antriebsriemens (44) eingreifen und das andere Riemenscheibenteil eine Auflagefläche für den Antriebsriemen (44) trägt, und daß der Außendurchmesser des Riemenscheibenteiles, der die Auflagefläche aufweist, größer ist als der zwischen den Vorsprüngen (46) gemessene Durchmesser des Riemenscheibenteiles mit den Vorsprüngen (46).

## Claims

1. Belt drive with a belt pulley,
- with a first belt pulley part having a supporting surface (5, 5a; 15, 15a; 25, 25a) for a belt (4; 14; 24) and the supporting surface defining a drive means together with the belt and
- a second belt pulley part (9; 19; 29) having radially extending projections (2; 12; 22) for engaging in coacting perforations (3; 13; 23) of the belt and defining a drive means too,
characterized by the fact, that the drive means being arranged decoupled from another.

2. Belt drive according to claim 1, characterized by the fact, that the belt pulley consists of two independent turnable belt pulley parts (9, 10, 10a).

3. Belt drive according to claim 2, characterized by the fact, that the diameter (D) of the first belt pulley part (10, 10a) having the supporting surface (5, 5a) is greater than the diameter (d) of the second belt pulley part (9) measured between the projections (2).

4. Belt drive according to claim 2 or 3, characterized by the fact, that the first belt pulley part having a supporting surface (5, 5a; 25, 25a) being mounted on ball bearing means (7, 7a; 27, 27a).

5. Belt drive according to claim 4, characterized by the fact, that the first belt pulley part having a supporting surface (25, 25a) being defined by the outer race (30; 30a) of the ball bearing means (27, 27a) and the second belt pulley part (29) having the projections (22) drives the belt (24).

6. Belt drive according to one of claims 1-5, characterized by the fact, that the projections (12, 22) of the belt pulley having a rectangular outline when viewed in plan.

7. Belt drive according to claim 6, characterized by the fact, that the projections (22) being circular-arc-shaped in radial direction.

8. Belt drive according to one of claims 1-7, characterized by its use as focal plane shutter (40) for a photogrammetric camera.

9. Photogrammetric camera with a focal plane shutter, characterized by the fact, that the shutter slit (53) is driven by at least one belt drive with a belt pulley (47), which consists of two independent turnable belt pulley parts, one of which having radially extending projections (46) for engaging in coacting perforations (45) of the belt (44), the other one having a supporting surface for the belt (44) and the outer diameter of the belt pulley part having the supporting surface being greater than the diameter of the other belt pulley part with the projections (46) measured between the projections (46).

## Revendications

1. Transmission à courroie munie d'un pignon
- dont une partie présente une surface (5, 5a; 15, 15a; 25, 25a) qui sert d'appui à la courroie (4; 14; 24), ladite surface d'appui formant un engrenage avec la courroie, et
- dont une autre partie (9; 19; 29) est pourvue d'épaulements (2; 12; 22) qui sont disposés dans une direction radiale et qui s'engagent dans les évidements (3; 13; 23) prévus à cet effet dans la courroie, l'ensemble formant également un engrenage,
**caractérisée en ce que** les deux engrenages sont aménagés de façon à être découplés l'un par rapport à l'autre.

2. Transmission à courroie selon la revendication 1, caractérisée en ce que le pignon comprend au moins deux parties (9; 10, 10a) dont la rotation est autonome.

3. Transmission à courroie selon la revendication 2, caractérisée en ce que le diamètre (D) de la partie (10, 10a) qui sert de surface d'appui (5, 5a) est plus grand que le diamètre (d) mesuré sur la partie (9) qui est garnie des épaulements (2).

4. Transmission à courroie selon la revendication 2 ou 3, caractérisée en ce que la partie qui sert de surface d'appui (5, 5a; 25, 25a) repose sur des roulements à billes (7, 7a; 27, 27a).

5. Transmission à courroie selon la revendication 4, caractérisée en ce que la bague extérieure (30, 30a) des roulements à billes (27, 27a) forme respectivement la partie qui sert de surface d'appui (25, 25a) à la courroie (24), et en ce que la partie (29) qui porte les épaulements (22) entraîne ladite courroie (24).

6. Transmission à courroie selon l'une des revendications énoncées de 1 à 5, caractérisée en ce que les épaulements (12, 22) du pignon possèdent un profil de section rectangulaire.

7. Transmission à courroie selon la revendication 6, caractèrisée en ce que les épaulements (22) présentent une configuration en arc de cercle dans la direction radiale.

8. Transmission à courroie selon l'une des revendications énoncées de 1 à 7, caractérisée en ce qu'elle est employée pour entraîner l'obturateur à fente (40) d'une chambre aérophotogrammétrique.

9. Chambre aérophotogrammétrique munie d'un obturateur à fente, caractérisée en ce que la fente (53) est actionnée par au moins une transmission à courroie, dont le pignon (47) est constitué au moins de deux parties pivotantes indépendantes dont l'une présente des épaulements (46) dans la direction radiale, insérés dans les évidements (45) de la courroie (44), et dont l'autre sert de surface d'appui à la courroie (44), et en ce que le diamètre externe de la partie qui sert de surface d'appui est plus grand que le diamètre mesuré entre les épaulements (46) sur l'autre partie considérée.
